(19) Europäisches Patentamt
European Patent Office
Office européen des brevets

(11) **EP 3 032 780 B1**

(12) **EUROPEAN PATENT SPECIFICATION**

(45) Date of publication and mention
of the grant of the patent:
**09.05.2018 Bulletin 2018/19**

(51) Int Cl.:
***H04L 12/58*** *(2006.01)*      ***H04W 4/02*** *(2018.01)*
*G01C 21/20* *(2006.01)*

(21) Application number: **14290406.9**

(22) Date of filing: **12.12.2014**

(54) **METHOD AND APPARATUS FOR TRANSMITTING MESSAGES TO USERS USING TRAJECTORY-BASED CLUSTERING**

VERFAHREN UND VORRICHTUNG ZUR ÜBERTRAGUNG VON NACHRICHTEN AN BENUTZER UNTER VERWENDUNG VON BAHNBASIERTEM CLUSTERING

PROCÉDÉ ET APPAREIL DE TRANSMISSION DE MESSAGES À DES UTILISATEURS À L'AIDE D'UN CLUSTERING BASÉ SUR UNE TRAJECTOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.06.2016 Bulletin 2016/24**

(73) Proprietor: **Alcatel Lucent**
**91620 Nozay (FR)**

(72) Inventors:
• **Lee, Jeongran**
**121-270 Seoul (KR)**
• **Choi, Nakjung**
**121-270 Seoul (KR)**

(74) Representative: **Wetzel, Emmanuelle et al**
**Alcatel-Lucent**
**Intellectual Property Business Group**
**70430 Stuttgart (DE)**

(56) References cited:
**EP-A1- 2 040 214      US-A1- 2011 276 565**

• **WEI-JEN HSU ET AL: "Structural Analysis of User Association Patterns in University Campus Wireless LANs", IEEE TRANSACTIONS ON MOBILE COMPUTING, IEEE SERVICE CENTER, LOS ALAMITOS, CA, US, vol. 11, no. 11, 1 November 2012 (2012-11-01), pages 1734-1748, XP011463473, ISSN: 1536-1233, DOI: 10.1109/TMC.2011.254**
• **YU ZHENG ET AL: "Recommending friends and locations based on individual location history", ACM TRANSACTIONS ON THE WEB, vol. 5, no. 1, 1 February 2011 (2011-02-01), pages 1-44, XP055189999, ISSN: 1559-1131, DOI: 10.1145/1921591.1921596**

**Description**

Technical Field

This application relates to a method and a server for automatically providing information to a user. The method and server are particularly applicable to providing navigation information to the user. The application further relates to a method and a server for automatically transmitting a message to the user.

Background

In modern society, a large number of people (users) are aggressively participating in socio-economic activities as members of diverse communities. Small and unique groups are dynamically created and broken up depending both on time and location. To enhance personal, social, economic and environmental services provided to users by service providers, reliable analytics that can provide community intelligence from information of interactions between people within or across communities is strongly required.

This trend can be observed e.g. in web search engines and social network services having access to location data, which attempt to explore community intelligence to improve service quality in various socio-economic aspects. Some such services relate to providing information to users based on acquired community intelligence. One approach towards exploring community intelligence is based on analyzing the users' mobility patterns, such as individual users' trajectories, wherein a mobility pattern is understood to relate to an aggregation of information jointly indicating time and location of the user.

With the advent of mobile devices that access communication networks and/or that are capable of determining their position on the basis of satellite signals, such as the GPS signal, location tracking of users of such devices becomes available.

In general, mobile users' data is generated from a centralized system that collects the SMS and cell connection history of mobile devices within serving areas, specifically having a form of the connectingtime and GPS (or cell) location for each individual mobile device during a given time period. Using contemporary location tracking techniques, it is possible to keep track of mobile user's locations with high resolution, which results in sparse user location data in a much larger sample space. Examples of existing algorithms for trajectory analysis employ individual motion prediction based on Hidden Markov Models (HMM) or recommendation systems based on Collaborative Filtering (CF). Both of these approaches focus on predicting likelihood of an individual user's interest on certain places by referring the user's own or similar people's mobility histories. These approaches can result in two extreme kinds of results: one only focused on individual uniqueness of mobility patterns or, in contrast, too strongly smoothed out preferences resulting from collaboratively imputed information.

Thus, from a community discovery perspective, the inferred likelihood of individual motion patterns or artificially imputed ratings of users to a certain place can distort true interactions between users and places, especially when using sparse location data sets. In such constellations, providing information to users based on community intelligence acquired from mobility patterns results in inaccurate assignment and distribution of information to users, at the cost of service quality and overall system efficiency. In addition, existing algorithms are computationally extensive which makes it hard to retrain user-location associations that only can be deployed in the static off-line settings.

Reference is also made to US patent application publication No. US 2011/276565 A1 which discloses techniques for constructing a location and activity recommendation model to identify relationships between locations and activities. To construct the model, the process obtains GPS logs of geographical locations collected over time and identifies stay points representing locations visited by an individual user. The process also identifies points of interest in a region using a database and correlates a relationship between activity to activity by submitting queries to a search engine. The information gathered is used to fill locations and activities in a location-activity matrix lining the space of locations to the space of activities. Recommendations may be made for a location and/or activity when given a user query, based on a user's present geographical location, or a prediction of a user's interest.

Further reference is made to Hsu, W.-J., Dutta, D., Helmy, A. (1 November 2012), "Structural Analysis of User Association Patterns in University Campus Wireless LANs", IEEE Trans. on Mobile Computing, vol. 11, no. 11, pp. 1734-1748. This document discloses generation of an association matrix for each of a plurality of users, the association matrices containing association vectors that indicate, for a given time-slot, the association of the respective user to each of a plurality of locations. For each user, clustering of association vectors is performed by means of a Singular Value Decomposition of the user's association matrix. Then, a similarity between two users is determined by applying a similarity metric to singular vectors of each of the tow users' association matrices.

Yet further reference is made to Zheng, Y., Zhang, L., Ma, Z., Xie, X., Ma, W.-Y. (1 February 2011), "Recommending Friends and Locations Based on Individual Location History", ACM Trans. Web, vol. 5, no. 1, pp. 1-44.

In view of the above, there is a need for an improved method and apparatus for acquiring community intelligence and for performing user clustering based on mobility patterns. There is further need for an improved method and apparatus for automatically providing information to users based on mobility patterns.

Summary

In view of this need, the present document provides a method of automatically providing information to a first user and a server for automatically providing information to a first user communicating with the server, having the features of the respective independent claims. Preferred embodiments are described in the dependent claims. In the following elements of the claimed invention are described in other words.

An example relates to a method of automatically providing information (e.g. by transmitting a message) to a first user. The method comprises obtaining a first set of time-stamped previous locations (positions) of the first user and obtaining, for each of a plurality of second users, a second set of time-stamped previous locations (positions) of the second user. The first set of time-stamped previous locations may be time-ordered, and the second sets of time-stamped previous locations may be time-ordered. The first and second sets may be obtained by user input or may be read from a database, for example. The first and second sets may further be automatically obtained by means of a tracking device comprised e.g. by a mobile device of the respective user that may collect and/or transmit location information. The method further comprises determining, for each of the first and second users, one or more stay locations by compressing the respective set of time-stamped previous locations, and generating a (real-valued) user-location matrix linking the (vector-) space of the first and second users and the (vector-) space of stay locations to respective quantities indicative of durations or counts of stay. Each of the entries of the user-location matrix relates to a given one of the first and second users and to a given stay location, and correspond to a quantity indicative of a duration or count of stay of the respective user at the respective stay location. The dimensionality of the space of the stay locations may correspond to the aggregate of the one or more stay locations of each of the first and second users. The quantity indicative of the duration or count of stay of the respective user at the respective stay location may depend on a time difference between an arrival time at the stay location and a departure time from the stay location, and/or on a count of visits of the user at the stay location during a predetermined period of time.

The method further comprises performing a singular value decomposition of the user-location matrix to obtain singular values of the user-location matrix and singular vectors of the user-location matrix relating to the first and second users, selecting a subset of the singular vectors that correspond to a given number of the largest singular values, and determining a plurality of user groups by performing clustering on the subset of singular vectors. The method further comprises providing information to the first user in accordance with an association of the first user to a user group among the plurality of user groups. The subset of singular vectors may be a real subset of the singular vectors obtained by the singular value decomposition.

Configured as above, the method compresses an individual user's trajectories into important stay locations based on his/her visiting time (e.g. visiting duration, visiting frequency and time of the day). By taking all the unique important stay locations of all users as corresponding to the columns (or rows), a preference matrix can be generated with each user's row vector (or column vector) having entries representative of counts or durations of visit. Applying the Singular Value Decomposition (SVD) on this sparse and high-dimensional preference matrix yields the principal component directions of the preference matrix, which can be interpreted as each user's uniqueness (or unique direction) in the characteristic space. Since the SVD provides for a significant reduction of the data dimensionality and captures the underlying latent structure of the matrix, a user's interest (and association) in important stay locations can be obtained as a feature vector (i.e. eigenvector or singular vector) that reflects the engagement between users and locations. Proximity between users in the space of users can then be determined by calculating a distance metric for respective vectors and applying a statistical clustering method (e.g. k-means clustering) to obtain groups of similar users. Thus, the proposed method provides a user group ID to each user indicating a user group with which the respective user is associated.

As indicated above, with sparse location data sets obtained from individual trajectories, focuses of existing solutions for trajectory-based analysis converge to either one of two extremes, i.e. too individual or too aggregated. A particular advantage of the above method is to discover an engagement between users and stay locations even with very sparse data sets, while it requires execution of relatively simple algorithms only. Thus, the above method provides for efficient, simple and scalable community discovery by clustering mobile users' trajectories in a transformed and simplified space. Significant user groups of users having similar mobility patterns with regard to both time and location can be identified by the method. This allows for targeted provision of information to users, e.g. in the form of messages, e.g. for purposes of targeted promotion. Such targeted promotion may also involve setting up an outdoor billboard in accordance with the users' mobility patterns for a given user group.

The message includes navigation information relating to a target location, e.g. navigation information indicating a target location to navigate to and/or providing navigation directions towards the target location. The message is transmitted to the first user in accordance with a current location of the first user. The message is generated based on the association of the first user to the user group and the current location of the first user. That is, the navigation information may be generated based on the association of the first user to the user group and the current location of the first user. For instance, the target location may be determined based on the association of the first user to the user group and the current location of the first user. As an example, the target location may be determined as a stay location of a second user among the plurality of second users that is associated with the same user group as the first user in such a manner that the target location is close to the current location of the first user (i.e. the spatial distance between the target location and the current location is less than a predetermined threshold).

The obtained first and second sets of time-stamped previous locations may be subjected to pre-processing. Such pre-processing may involve, for each set, cleaning up duplicate time-stamped previous locations having identical time stamps, summing up stay durations for time-stamped previous locations having identical locations, and/or correcting locations for an impact of earth's curvature in order to enable a more efficient calculation of distances between locations at later stages. Accordingly, the method may comprise pre-processing the first and second sets of time-stamped previous locations by identifying, in each set, first groups of time-stamped previous locations that have identical time-stamps, and removing all but one of the time-stamped previous locations in each identified first group. The method may further comprise pre-processing the first and second sets of time-stamped previous locations by identifying, in each set, second groups of time-stamped previous locations correspond to identical locations, and removing all but the earliest and the latest time-stamped previous location in each identified second group.

Thereby, more efficient processing of the sets of time-stamped previous locations is enabled and computation costs at runtime can be reduced.

Determining the one or more stay locations from a given set of previous time-stamped locations may involve, for a first pair of time-stamped previous locations, determining whether a first condition is satisfied, wherein the first condition is satisfied if a spatial distance between said first pair of time-stamped previous locations is smaller than a predetermined distance threshold value, and for a second pair of time-stamped previous locations, determining whether a second condition is satisfied, wherein the second condition is satisfied if a difference in time between said second pair of time-stamped previous locations is larger than a predetermined time threshold value. The method may further involve relating a group of consecutive time-stamped previous locations to a stay location if each of pairs of consecutive time-stamped previous locations in the group satisfies the first condition and if the pair formed by the earliest time-stamped previous location in the group and the latest time-stamped previous location in the group satisfies the second condition. Determining the one or more stay locations for a given set of time-stamped previous locations may further involve setting an average of the time-stamped previous locations of said group of consecutive time-stamped previous locations as the stay location. Determining the one or more stay locations for a given set of previous time-stamped locations may yet further involve setting a difference in time between a time stamp of the earliest time-stamped previous location and the time-stamp of the latest time-stamped previous location in said group of consecutive time-stamped previous locations as the quantity indicative of the duration or count of stay at the stay location.

Configured as above, the method provides for an efficient and simple determination of important stay locations for each user, thereby compressing the sets of time-stamped previous locations to a set of one or more stay locations.

The clustering may involve determining a value of a distance measure between a pair of singular vectors in the subset of singular vectors. The clustering may further involve determining a predetermined number of clusters of singular vectors in the subset of singular vectors in such a manner that a sum of variances of values of the distance measure within each cluster is minimized. The clustering may yet further involve applying a k-means clustering algorithm to the subgroup of singular vectors.

The clustering may further involve identifying a singular vector corresponding to the first user, by determining the singular vector that has its largest component at a position within the singular vector that corresponds to the position of the first user in the space of users, and identifying, as the user group to which the first user is associated, the user group containing the singular vector corresponding to the first user.

Another example relates to a server for providing information (e.g. by transmitting a message) to a first user communicating with the server. The server comprises a first input unit configured to obtain a first set of time-stamped previous locations (positions) of the first user and a second input unit configured to obtain, for each of a plurality of second users, a second set of time-stamped previous locations (positions) of the second user. The first and second input unit may comprise first and second communication units that communicate with and receive location information from respective tracking devices e.g. contained in mobile devices of the first and second users, that automatically collect location information and transmit same to the server, and the first and second input units may aggregate said location information into the respective sets. The first set of time-stamped previous locations may be time-ordered, and the second sets of time-stamped previous locations may be time-ordered. The first and second sets may be obtained by user input or may be read from a database, for example. The server further comprises a computation unit configured to determine, for each of the first and second users, one or more stay locations by compressing the respective set of time-stamped previous locations, and generate a (real-valued) user-location matrix linking the (vector-) space of the first and second users and the (vector-) space of stay locations to respective quantities indicative of durations or counts of stay.

Each of the entries of the user-location matrix may relate to a given one of the first and second users and to a given stay location, and correspond to a quantity indicative of a duration or count of stay of the respective user at the respective stay location. The dimensionality of the space of the stay locations may correspond to the aggregate of the one or more stay locations of each of the first and second users. The quantity indicative of the duration or count of stay of the respective user at the respective stay location may depend on a time difference between an arrival time at the stay location and a departure time from the stay location, and/or on a count of visits of the user at the stay location during a predetermined period of time.

The computation unit is further configured to perform a singular value decomposition of the user-location matrix to obtain singular values of the user-location matrix and singular vectors of the user-location matrix relating to the first and second users, select a subset of the singular vectors that correspond to a given number of the largest singular values, and determine a plurality of user groups by performing clustering on the subset of singular vectors. The server may further comprise a transmitting unit configured to provide information (e.g. by transmitting a message) to the first user in accordance with an association of the first user to a user group among the plurality of user groups. The subset of singular vectors may be a real subset of the singular vectors obtained by the singular value decomposition.

The server further comprises a message generation unit configured to generate navigation information in accordance with the association of the first user to the user group among the plurality of user groups, the navigation information relating to a target location, and including the navigation information in the message. The message generation unit is further configured to generate the navigation information in accordance with a current location of the first user.

Another example relates to a method of automatically grouping users into user groups. The method may comprise obtaining a plurality of sets of time-stamped previous locations (positions) of a plurality of users. The sets of time-stamped previous locations may be time-ordered. The sets may be obtained by user input or may be read from a database, for example. The first and second sets may further be automatically obtained by means of a tracking device comprised e.g. by a mobile device of the respective user that may collect and/or transmit location information. The method may further comprise determining, for each user, one or more stay locations by compressing the respective set of time-stamped previous locations, and generating a (real-valued) user-location matrix linking the (vector-) space of the users and the (vector-) space of stay locations to respective quantities indicative of durations or counts of stay. Each of the entries of the user-location matrix may relate to a given one of the users and to a given stay location, and correspond to a quantity indicative of a duration or count of stay of the respective user at the respective stay location. The dimensionality of the space of the stay locations may correspond to the aggregate of the one or more stay locations of each of the users. The quantity indicative of the duration or count of stay of the respective user at the respective stay location may depend on a time difference between an arrival time at the stay location and a departure time from the stay location, and/or on a count of visits of the user at the stay location during a predetermined period of time.

The method may further comprise performing a singular value decomposition of the user-location matrix to obtain singular values of the user-location matrix and singular vectors of the user-location matrix relating to the users, selecting a subset of the singular vectors that correspond to a given number of the largest singular values, and determining the plurality of user groups by performing clustering on the subset of singular vectors. The subset of singular vectors may be a real subset of the singular vectors obtained by the singular value decomposition.

Yet another example relates to a server for automatically grouping users into user groups. The server may comprise an input unit configured to obtain, for each of a plurality of users, a set of time-stamped previous locations (positions) of the. The sets of time-stamped previous locations may be time-ordered. The sets may be obtained by user input or may be read from a database, for example. The first and second input units may comprise first and second communication units that communicate with and receive location information from respective tracking devices e.g. contained in mobile devices of the first and second users, that automatically collect location information and transmit same to the server, and the first and second input units may aggregate said location information into the respective sets. The server may further comprise a computation unit configured to determine, for each user, one or more stay locations by compressing the respective set of time-stamped previous locations, and generate a (real-valued) user-location matrix linking the (vector-) space of the users and the (vector-) space of stay locations to respective quantities indicative of durations or counts of stay. Each of the entries of the user-location matrix may relate to a given one of the users and to a given stay location, and correspond to a quantity indicative of a duration or count of stay of the respective user at the respective stay location. The dimensionality of the space of the stay locations may correspond to the aggregate of the one or more stay locations of each of the users. The quantity indicative of the duration or count of stay of the respective user at the respective stay location may depend on a time difference between an arrival time at the stay location and a departure time from the stay location, and/or on a count of visits of the user at the stay location during a predetermined period of time.

The computation unit may be further configured to perform a singular value decomposition of the user-location matrix to obtain singular values of the user-location matrix and singular vectors of the user-location matrix relating to the users, select a subset of the singular vectors that correspond to a given number of the largest singular values, and determine a plurality of user groups by performing clustering on the subset of singular vectors. The subset of singular vectors may be a real subset of the singular vectors obtained by the singular value decomposition.

It will be appreciated that the method steps and apparatus features described above may be interchanged in many ways. In particular, the details of the disclosed apparatus can be implemented as a method, and the disclosed method steps implemented as apparatus features, as the skilled person will appreciate.

**Brief Description of the Figures**

The invention is explained below in an exemplary manner with reference to the accompanying drawings, wherein

**Fig. 1** schematically illustrates an example of a method according to embodiments of the invention; and

**Fig. 2** schematically illustrates an example of an apparatus according to embodiments of the invention.

**Detailed Description**

It should be noted that the methods and systems including its preferred embodiments as outlined in the present disclosure may be used stand-alone or in combination with the other methods and systems disclosed in this document. Furthermore, all aspects of the methods and systems outlined in the present disclosure may be arbitrarily combined. In particular, the features of the claims may be combined with one another in an arbitrary manner. Further, if not explicitly indicated otherwise, embodiments can be freely combined with each other.

In the following, the terms mobile device and user will be used interchangeably. Further, the following definitions will be adhered to in the remainder of the present disclosure. A (GPS or base station's location) trajectory of a user is a sequence of the user's access points (time-stamped previous locations), each of which contains a latitude, a longitude, and a timestamp. A trajectory is an ordered (i.e. time-ordered) sequence of these access points that can be represented in the form of three element vectors (i.e. vectors having three components each). Thus, a trajectory can be said to relate to a (time-ordered) set of time-stamped previous locations of a user. An access point contained in a trajectory may also be referred to as a record. A stay point (stay location) stands for a geographic region where a user has stayed in over a certain time interval. The stay point may be represented by a location (geographical position) that is indicative of the geographic region, such as a geographic center of the geographic region. Extraction of a stay point depends on two scale parameters, a time threshold ($\theta_t$) and a distance threshold ($\theta_d$). Its calculation will be explained below. Table 1 illustrates raw data of two records of a user's trajectory.

**Table 1. User Mobility From 8:00 AM**

| Time Stamp | 2008-09-05 08:26:22 | 2008-09-05 08:27:13 | ... |
|---|---|---|---|
| Latitude | 39.98470 | 39.98468 | ... |
| Longitude | 116.3184 | 116.3184 | ... |

People (users) sharing similar important places in a small time interval can be said to have proximity. Mobile service subscribers show very bursty usage patterns, and diverse features are to be extracted that can be used to describe the extent of activity such as percentage of interactions at nocturne or daytime or inter-access time. In the following, meaningful feature extraction methods, dimension reduction methods of sparse matrices, and clustering (e.g. k-means clustering) of feature vectors will be described.

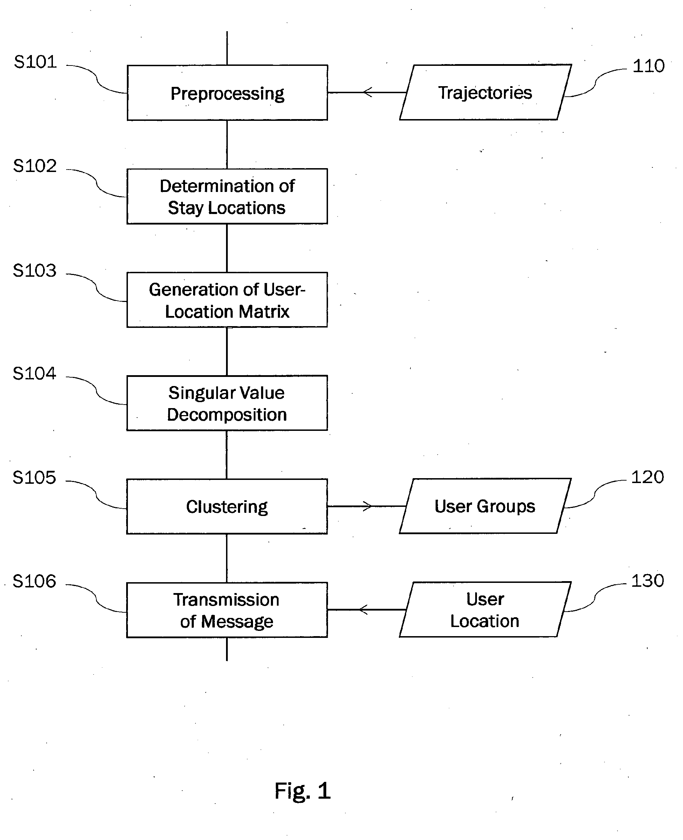

**Fig. 1** is a schematic flow-chart illustrating an example of a method according to embodiments of the invention.

As a first step, at step S101 the available dataset may be preprocessed. Said preprocessing, which is optional, may relate to each trajectory in the dataset. Step S101 receives a plurality of trajectories 110 as an input. The trajectories may be provided by a database or by respective users, for example. The trajectories may relate to a first user and a plurality of second users. The preprocessing may have sub-steps relating to removal of duplicated time records, summary of time durations at each location, and correction for effects of earth's curvature. These sub-steps will be described in more detail below.

1) Cleaning of duplicated time records: For a more reliable and simple computation, records with duplicated timestamps that appear consecutively in a trajectory can be regarded as errors and may be removed from the trajectory. Only the first occurrence of those records with identical time values indicated by their timestamps is retained.

2) Summary of time durations at each location: The sampling rate e.g. of given GPS data may vary so that records are collected every 2 or 3 seconds on average. This results in a redundancy in trajectory records since the same pairs of latitude and longitude observations may be collected in short time intervals. For this reason, records having no location distance (spatial distance) from their respective preceding records in the trajectory may be deleted and respective differences in time may be summed up and considered as the user's staying duration (duration of stay) at that location. Alternatively, for a number of consecutive records having no location distance from each other, only the first and the last record may be retained, and intermediate records may be deleted.

3) Earth curvature: Distances between two latitude and longitude pairs need to be measured by considering the curvature of earth. Since the earth is a sphere and the given data consists of latitude and longitude e.g. in units of degrees, errors corresponding to dozens of kilometers can be made if the Euclidean distance is simply applied. Based on the meridian distance integrals used commonly in geodesy, we assume the calculation of the distances in kilometers as follows.

Let the i-th record $p_i$ of a trajectory of a user contain a latitude $p_i. Lat,$ a longitude $p_i. Long,$ and a timestamp $p_i. T.$ Let $\Delta lat$ and $\Delta long$ be the differences in degrees between latitudes and longitudes, respectively, of two records (locations) $p_i$ and $p_j$ at a specific latitude $\phi[°]$. If $\phi = 0°$, a change in longitude $\Delta long = 1°$ between the two records $p_i$ and $p_j$ corresponds to 111.320km. This can be formulated by a proportional expression with the distance in kilometers at zero degree latitude per degree longitude versus distance (in km) in longitudinal arc at latitude min($lat$) per degree longitude as:

$$\cos\left(\min(lat)\right) : 1 = \left(\text{Arc long @ } \min(lat)\right) : 111.320, \qquad (1)$$

based on the smaller latitude of the two records, where min($lat$) = min($p_i.Lat,p_j.Lat$) in degrees. Thus, as latitude changes, the distance $\Delta dist\_long$ of longitude can vary extremely. In contrast, change of longitude does not result in a significant difference (less than 2km) when determining the distance $\Delta dist\_lat$ of latitude. Further, the fixed latitude min($lat$) = 41° that corresponds to an average latitude of records in the available dataset has been assumed when determining the longitudinal distances. Then a change in longitudinal value $\Delta long = 1°$ corresponds to 84.014km by above equation (1). The actual distance between two points is then obtained by using Pythagoras' theorem as $\Delta dist = \sqrt{\Delta dist\_long^2 + \Delta dist\_lat^2}$ . A distance function determining the distance between records $p_i$ and $p_j$ in accordance with the above will be referred to as $Distance(p_i,p_j)$. The effect of earth curvature is not a serious one from after this preprocessing and can be neglected accordingly, i.e. the effect of earth curvature is taken into account by the distance function.

At step S102, stay points are determined for each trajectory. This step can be said to correspond to a compression of respective trajectories.

As indicated above, the *i*-th record $p_i$ of a trajectory of a user contains a latitude $p_i.Lat,$ a longitude $p_i.Long,$ and a timestamp $p_i.T$. If we have two scale parameters, a time threshold $\theta_t$ and a distance threshold $\theta_d$, a stay point s can be regarded as a virtual location characterized by a group of consecutive access points (records) $P = \{p_m,p_{m+1},...,p_n\}$, where $\forall m < i \leq n$, $Distance (p_m,p_i) \leq \theta_d$ and $|p_n. T - p_m. T| \geq \theta_t$. Conditioned by $P$, $\theta_d$ and $\theta_t$, a stay point defined as $s =$ ($Lat, Long, arvT, levT$) can be calculated by

$$s. Lat = \sum_{i=m}^{n} p_i. Lat/|P|, \qquad (2)$$

$$s. Long = \sum_{i=m}^{n} p_i. Long/|P|, \qquad (3)$$

where $s. Lat$ and $s. Long$ are the average latitude and longitude, respectively, of the collection $P$ of records, $|P|$ represents the number of records in $P$, and $s. arvT = p_m. T$ and $s. levT = p_n. T$ represent the user's arrival time and leaving time, respectively, at stay location s (in this context, reference is made to Zheng, Y., Zhang, L., Ma, Z., Xie, X., Ma, W.Y. (2007), "Recommending Friends and Locations Based on Individual Location History", ACM Trans. Asian Language Information Processing, vol. 6, no. 3, pp. 1-47). In addition, a sampling rate of mobile devices for the case of trajectories that are obtained from GPS data may be considered in order to discriminate between staying and a congested status from the signal's inter-arrival time.

Among stay locations determined from trajectories, important places for each individual may be identified, such as home or office. Rule-based algorithms from empirical values of dwell time or time of day may be used to define a home location, e.g. by calculating the average of most frequently and most long-lastingly visited latitudes and longitudes from midnight to 4am. Daytime places are more diversified between users, so only the most frequently visited stay locations or stay locations visited with the longest duration during daytime are captured after removing home. By step S102, one or more stay locations are determined for each trajectory, as indicated above.

At step S103, a sparse people-place matrix (user-location matrix, preference matrix) is generated.

Here, the original user-location matrix $A$ of size $m \times n$ is defined, which includes entries $r_{ul}$ referring to e.g. counts of visits or a cumulative visit duration during a predetermined period of time (quantity indicative of a duration or count of stay) for user $u$ at location $l$, out of $m$ users and $n$ stay locations. Here, $n$ may be much larger than $m$. Entries of $A$ may be any behavioral feature obtained previously, but need to well reflect the engagement between people and places. Matrix $A$ can be said to link the space of the users and the space of stay locations to respective quantities indicative of durations or counts of stay and thus corresponds to a bilinear map from the (vector-) spaces of users and stay locations to the real-valued space of stay counts/locations. Each entry of matrix $A$ relates to a given one of the users and to a given stay location, and corresponds to a quantity indicative of a duration or count of stay of the respective user at the respective stay location.

At step S104, a singular value decomposition (SVD) of the user-location matrix $A$ is performed. The SVD is one of well-known matrix factorization methods, which takes an $m \times n$ matrix $A$ with rank $r$, and decomposes it as

$$A = USV^T, \qquad (4)$$

where $U$ and $V$ are orthogonal matrices with dimensions $m \times m$ and $n \times n$, respectively, and $S$ is called as the singular matrix with dimensions $m \times n$ whose diagonal entries are non-negative real numbers. The initial $r$ diagonal entries of $S(s_1, s_2, ..., s_r)$ have the property that $s_i > 0$ and $s_1 \geq s_2 \geq \cdots \geq s_r$. Accordingly, the first $r$ columns of $U$ are eigenvectors of $AA^T$ and represent the left singular vectors of $A$ and those of $V$ are eigenvectors of $A^TA$ and represent the right singular vectors of $A$. By retaining the $k << r$ largest singular values of $S$ and discarding the rest, the dimensionality of the data can be reduced, while the underlying latent structure of the original data is captured. A reasonable choice for the number $k$ of singular values to be retained is given by $m$, the number of users. The eigenvectors (left singular vectors, i.e. columns of $U$) are also called the principal components (or Karhunen-Loeve) directions of $A$ and can be interpreted as a user's uniqueness (or unique direction) in the characteristic space. Accordingly, the left singular vectors can also be referred to as feature vectors.

Each of the feature vectors $x_i$, $i = 1,...,k$ corresponds to a given one of the users. The corresponding user can be determined by identifying the largest element (by magnitude) of the respective feature vector. Each feature vector has $m$ elements, and the $j$-th element $x_{ji}$ being the largest element indicates that feature vector $x_i$ corresponds to the $j$-th user, i.e. to the user to which the $j$-th row of the preference matrix $A$ corresponds.

It is to be noted that alternatively, the user-location matrix $A$ could be generated to have dimensionality $n \times m$ and to have entries $r_{lu}$ referring to e.g. counts of visits or a cumulative visit duration during a predetermined period of time (quantity indicative of a duration or count of stay) for user $u$ at location $l$, out of $m$ users and $n$ stay locations. That is, in this case a row vector of $A$ would be associated with each stay location, and a column vector of $A$ would be associated with each user. Further, the right singular vectors of $A$ would correspond to the columns of $V$.

At step S105, clustering of the $k$ feature vectors obtained at step S104 is performed. Step S105 yields a collection of user groups 120.

Having obtained the feature vectors for each user, e.g. eigenvectors for users $U$ from preference matrix $A$, proximity (similarity) between users can be calculated using these feature vectors as behavioral indicators. The similarity score is the measure used for grouping similar users based on statistical clustering methods. In the following, it is supposed that one is interested in clustering $p$ elements $x_j$, $j \in \{1,...,p\}$ and that each element $x_j$ is an $n$ dimensional vector $(x_{1j},...,x_{nj})^T$. Note that for clustering the subset of singular vectors obtained at step S104, $p$ would be chosen to be equal to $k$. Let $d(x_j, x_{j'})$ denote the dissimilarity between elements $j$ and $j'$ and let $D$ be the $p \times p$ symmetric matrix of dissimilarities. Typical choices of dissimilarity may include, but are not limited to the Euclidean distance, 1 minus (absolute) correlation, and 1 minus cosine-angle. In the context of the disclosure, k-means clustering is considered, which is a method for finding clusters and cluster centers in a set of unlabeled data. However, the present disclosure is not limited to k-means clustering, and other clustering algorithms may be applied. One may chooses the desired number $N_S$ of cluster centers $\mu_i$, $i = 1, ..., N_S$ and the k-means procedure iteratively moves the centers $\mu_i$ of the clusters $S_i$, $i = 1, ..., N_S$ to minimize the total within cluster variance. In other words, the k-means clustering algorithm minimizes the quantity

$$J = \sum_{i=1}^{N_S} \sum_{x_j \in S_i} \left| d(x_j, \mu_i) \right|^2, \qquad (5)$$

which represents the total within cluster variance. The k-means algorithm is described e.g. in MacQueen, J. B. (1967), "Some Methods for Classification and Analysis of Multivariate Observations", Proceedings of fifth Berkeley Symposium on Mathematical Statistics and Probability, University of California Press. pp. 281-297; Steinhaus, H. (1957), "Sur la division des corps materiels en parties", Bull. Acad. Polon. Sci. 4 (12), pp. 801-804; and Lloyd, S. P. (1982), "Least squares quantization in PCM", IEEE Transactions on Information Theory 28 (2), pp. 129-137, and in Hastie, H., Tibshirani, R., Friedman, J. (2nd ed. 2009), "The Elements of Statistical Learning: Data Mining, Inference, and Prediction", Springer, pp. 459 et seq., to which reference is made.

As a result, step S105 outputs a plurality of $N_S$ clusters, or user groups 120. A given user is determined to belong to a given user group if the feature vector corresponding to the given user belongs to the given user group. Correspondence between feature vectors and users is determined as described above in connection with step S104.

At step S106, information is provided to the users in accordance with their association to (their belonging to) respective user groups. The providing of information may relate to transmitting messages to the users. For example, a message indicating a target location may be transmitted to the first user, wherein the target location is a preferred or current stay location of a second user that belongs to the same user group as the first user. The target location may further be determined in accordance with a current location 130 of the first user. Thereby, the first user is enabled to visit a preferred place of the second user, e.g. a restaurant or a bar.

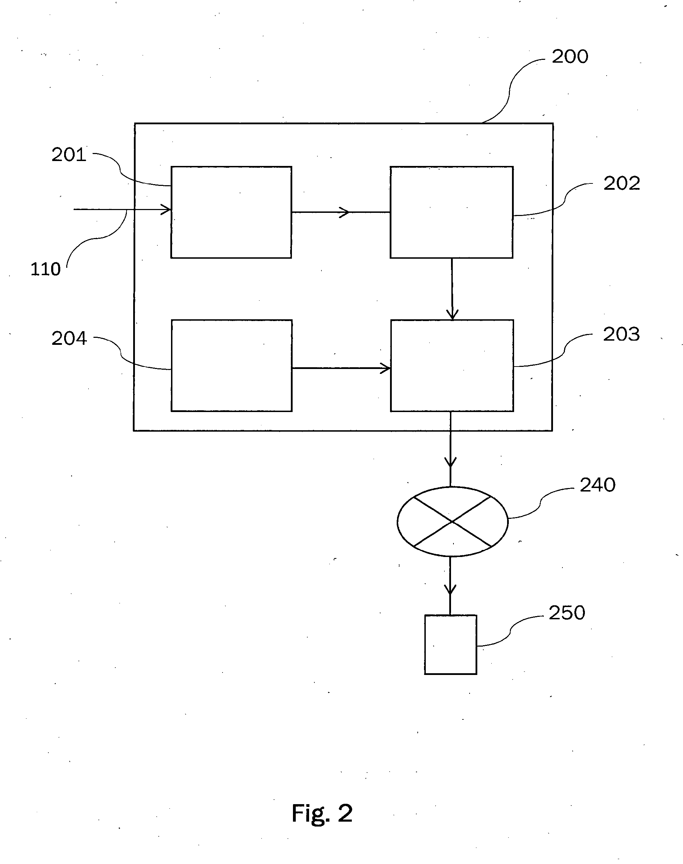

Fig. 2 is a schematic illustration of an example of a server according to embodiments of the invention. The server 200 is connected to a first user 250 via network 240. The server 200 comprises an input unit 210 for obtaining a plurality of sets of time-stamped previous locations. The input unit 201 may comprise a first input unit configured to obtain a first input unit adapted to obtain a first set of time-stamped previous locations of the first user and a second input unit adapted to obtain, for each of a plurality of second users, a second set of time-stamped previous locations of the second user.

The server 200 further comprises a computation unit 202 (e.g. a CPU) adapted to determine, for each of the users, one or more stay locations on the basis of the respective set of time-stamped previous locations. Thus, the computation unit 202 is adapted to carry out processing relatingto step S102. The computation unit 201 may be further adapted to carry out the pre-processing of step S101. The computation unit 202 may be further adapted to generate a user-location matrix linking the space of the first and second users and the space of stay locations to respective quantities indicative of durations or counts of stay, wherein each of the entries of the user-location matrix relates to a given one of the first and second users and to a given stay location, and corresponds to a quantity indicative of a duration or count of stay of the respective user at the respective stay location. Thus, the computation unit is adapted to carry out processing relating to step S103. The computation unit 202 may be yet further adapted to perform a singular value decomposition of the user-location matrix to obtain singular values of the user-location matrix and singular vectors of the user-location matrix relating to the first and second users, and to select a subset of the singular vectors that correspond to a given number of the largest singular values, i.e. to carry out processing relating to step S104. Lastly, the computation unit 202 may be adapted to determine a plurality of user groups 120 by performing clustering on the subset of singular vectors, i.e. to carry out processing relating to step S105.

The server 200 may further comprise a transmitting unit (a transmitter) 203 adapted to transmit a message to a user (such as the first user 250) in accordance with an association of the user to a user group among the plurality of user groups. The server 200 may further comprise a message generation unit 204 (e.g. a CPU) adapted to generate navigation information in accordance with the association of the user to the user group among the plurality of user groups, the navigation information relating to a target location, and to include (add) the navigation information in the message. The message generation unit 204 may be further adapted to generate the navigation information in accordance with a current location 130 of the user.

Next, simulation results and a calculation example of the user clustering procedure according to the disclosure are provided. It is to be understood that the present disclosure is not limited to the particular data structures described below, and that other suitable data structures may be employed.

The dataset used for the simulation was collected by the GeoLife GPS Trajectories project in Microsoft Research Asia, a social networking application. On the application, users uploaded their locations at that time and shared experiences with other users. The location information was saved as time-stamped data and represents trajectories or user mobility patterns. The dataset includes trajectories of 182 users over 5 years from April 2007 to August 2012, and consist of 17,621 trajectories with a total distance of 1,292,951 kilometers (km). Multiple trajectories of a single user may be treated as a single trajectory corresponding to a sum (concatenation) of the individual trajectories. Data is generated from over 30 cities and the majority was recorded in Beijing, China. The detailed description of variables in each record of the dataset is provided in Table 2 and aggregated records information is presented in Table 3.

**Table 2: Data Fields in Each Record in the Dataset**

| | |
|---|---|
| Field 1 | Latitude in decimal degrees |

(continued)

| Field 2 | Longitude in decimal degrees |
|---|---|
| Field 3 | Altitude in feet |
| Field 4 | Time Stamp (YYYY-MM-DD HH:MM:SS) |

**Table 3: Aggregated Summary of Dataset**

| | Scale |
|---|---|
| Time span of collection | April 2007 - August 2012 |
| Number of users | 182 |
| Number of trajectories | 18670 |
| Number of points | 24,876,978 |
| Total distance | 1,292,951km |
| Total duration | 50,176h |
| Effective days | 11,129 |

All users uploaded data through individual GPS loggers or GPS phones so that the sampling rate with which the loggers have sent location information varies from user to user.

First, stay points (stay locations) and important places were determined. Most of parts of trajectories were stamped at within 5-second intervals and those included not only staying locations but also in-transit or just passing points through which users have moved to get to their destinations. Staying points have been set to clear mobility patterns by applying standards to threshold parameters $\theta_d$ and $\theta_t$ defined above for spatial distances and time differences between two consecutive points as $\theta_d = 50m$ and $\theta_t = 20sec,$ results for which choice are illustrated among the preliminary results of Table 4 and Table 5. For different choices of the threshold parameters, different summary statistics as regards number of staying points (stay locations) and time duration (duration of stay) at those points result, as illustrated in Tables 4 and 5. It is found that some combinations of threshold parameters provide too aggregated information after averaging raw trajectories, which might mislead clustering of users based on an analysis of stay locations. Empirically, the threshold parameter value pair $(\theta_d, \theta_t) = (50m, 20sec)$ is found to discriminate a reasonable number of stay locations and to provide for reasonable granularity.

**Table 4: Summary Statistics for Staying Counts**

| $(\theta_d[m], \theta_t[sec])$ | Min. | 1st Qu. | Med. | Mean | 3rd Qu. | Max. | Std |
|---|---|---|---|---|---|---|---|
| (50,20) | 2 | 65.5 | 243.5 | 774.4 | 672.5 | 14025 | 1604.4 |
| (80,20) | 4 | 80.5 | 278 | 830.7 | 696.5 | 14784 | 1681.3 |
| (50,25) | 2 | 57.5 | 212.5 | 673.2 | 606.2 | 11575 | 1373.3 |
| (43,50) | 2 | 46.8 | 190.5 | 586.7 | 576.3 | 9590 | 1187.9 |

**Table 5: Summary Statistics for Staying Duration (Minutes)**

| $(\theta_d[m], \theta_t[sec])$ | Min. | 1st Qu. | Med. | Mean | 3rd Qu. | Max. | Std |
|---|---|---|---|---|---|---|---|
| (50,20) | 0.9 | 7.47 | 16.9 | 190.2 | 47.1 | 79140.2 | 2060.9 |
| (80,20) | 1.1 | 9.97 | 28.7 | 597.4 | 77.8 | 84089.2 | 3355.6 |
| (50,25) | 1.0 | 7.85 | 18.8 | 552.5 | 48.8 | 89692.2 | 2284.1 |
| (43,50) | 1.2 | 7.34 | 17.2 | 59.2 | 46.8 | 4031.6 | 349.9 |

To find the important places of each user, 'night' and 'daytime' labels may be pasted on the staying points.

Timestamps were classified as 'night' from midnight to 4am and as 'daytime' from 9am to 4pm. After ordering labeled points by latitude and longitude pairs, points that are close to each other may be grouped to partition several regions. The most frequently visited group at night may be chosen and set as the home of the respective user, and the sum of stay durations and number (counts) of observations in that group may be determined. The reason for using the mean for determining the standard criteria ($\theta_d$, $\theta_t$) is that it provides results that are more robust and is not influenced by extreme points, by contrast to the median. Note that some of trajectories may be dropped through this process if there are not enough observations in the data records.

In order to be able to explore similarity (proximity) between users, meaningful features of the users need to be extracted that stand for characteristics of individuals that share the property of visiting the same sequence of places within a short time interval. The preference matrix **A** of people at places from total counts or duration of visits at staying locations in 2-digit decimals granularity at the coordinate grid was been determined. The resulting total staying points (stay locations) were 5,398 locations. Considering more digits, the dimension of the preference matrix becomes very high and the matrix becomes very sparse, with a majority of elements missing (i.e. being zero). Based on the chosen approach, the 'sparsity' of the preference matrix (i.e. the ratio of numbers of non-zero elements and zero elements) was 1.48%. It was found that in the exemplary dataset, places near Beijing have a strong connection with a majority of users. The Euclidean distance is used to measure the proximity between users based on this user-location engagement (i.e. after applying SVD to the preference matrix **A**).

Next, results of the SVD-based user clustering are provided. Since the user's Eigen directions are orthogonal, the norm of each feature vector corresponds to 1. It can be inferred that in each user group, users have some of common places with similar counts of visits and number of places. Table 6 illustrates the distribution of users between user groups (clusters) in the exemplary dataset.

**Table 6: Distribution of Users Among k-Means Clusters**

| Group ID | 1 | 2 | 3 | 4 | 5 | 6 | 7 | 8 | 9 | 10 |
|---|---|---|---|---|---|---|---|---|---|---|
| # of users | 1 | 9 | 4 | 1 | 13 | 6 | 18 | 14 | 2 | 1 |
| Group ID | 11 | 12 | 13 | 14 | 15 | 16 | 17 | 18 | 19 | 20 |
| # of users | 1 | 1 | 39 | 1 | 1 | 50 | 1 | 5 | 12 | 1 |

It should be noted that the description and drawings merely illustrate the principles of the proposed methods and systems. Those skilled in the art will be able to implement various arrangements that, although not explicitly described or shown herein, embody the principles of the invention and are included within the scope defined in the appended claims. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

**Claims**

1. A method of automatically transmitting a message to a first user (250), the method comprising:

   obtaining a first set of time-stamped previous locations of the first user (250);
   obtaining, for each of a plurality of second users, a second set of time-stamped previous locations of the second user; and
   determining (S102), for each of the first and second users, one or more stay locations on the basis of the respective set of time-stamped previous locations;
   **characterized in that** the method further comprises:

   generating (S103) a user-location matrix linking the space of the first and second users and the space of stay locations to respective quantities indicative of durations or counts of stay, wherein a dimension of said space of the first and second users is given by the number of the first and second users, and wherein each of the entries of the user-location matrix relates to a given one of the first and second users and to a given stay location, and corresponds to a quantity indicative of a duration or count of stay of the respective user at the respective stay location;
   performing (S104) a singular value decomposition of the user-location matrix to obtain singular values of the user-location matrix and singular vectors of the user-location matrix relating to the first and second users; selecting a subset of the singular vectors that correspond to a given number of the largest singular values; determining (S105) a plurality of user groups by performing clustering on the subset of singular vectors; and transmitting (S106) a message including navigation information relating to a target location to the first user (250) in accordance with an association of the first user (250) to a user group among the plurality of user groups,

wherein the navigation information is generated based on the association of the first user (250) to the user group and a current location (130) of the first user (250).

2. The method according to claim 1, further comprising:
pre-processing the first and second sets of time-stamped previous locations by identifying, in each set, first groups of time-stamped previous locations that have identical time-stamps, and removing all but one of the time-stamped previous locations in each identified first group.

3. The method according to claim 1 or 2, further comprising:
pre-processing the first and second sets of time-stamped previous locations by identifying, in each set, second groups of time-stamped previous locations correspond to identical locations, and removing all but the earliest and the latest time-stamped previous location in each identified second group.

4. The method according to any one of the preceding claims, wherein determining, for each of the first and second users, one or more stay locations for a given set of time-stamped previous locations involves:

for a first pair of time-stamped previous locations, determining whether a first condition is satisfied, wherein the first condition is satisfied if a spatial distance between said first pair of time-stamped previous locations is smaller than a predetermined distance threshold value;
for a second pair of time-stamped previous locations, determining whether a second condition is satisfied, wherein the second condition is satisfied if a difference in time between said second pair of time-stamped previous locations is larger than a predetermined time threshold value; and
relating a group of consecutive time-stamped previous locations to a stay location if each of pairs of consecutive time-stamped previous locations in the group satisfies the first condition and if the pair formed by the earliest time-stamped previous location in the group and the latest time-stamped previous location in the group satisfies the second condition.

5. The method according to claim 4, wherein determining the one or more stay locations for a given set of time-stamped previous locations further involves:
setting an average of the time-stamped previous locations of said group of consecutive time-stamped previous locations as the stay location.

6. The method according to claim 4 or 5, wherein determining the one or more stay locations for a given set of time-stamped previous locations further involves:
setting a difference in time between a time stamp of the earliest time-stamped previous location and the time-stamp of the latest time-stamped previous location in said group of consecutive time-stamped previous locations as the quantity indicative of the duration or count of stay at the stay location.

7. The method according to any one of the preceding claims, wherein the clustering (S105) involves determining a value of a distance measure between a pair of singular vectors in the subset of singular vectors.

8. The method according to claim 7, wherein the clustering (S105) further involves determining a predetermined number of clusters of singular vectors in the subset of singular vectors in such a manner that a sum of variances of values of the distance measure within each cluster is minimized.

9. The method according to claim 7 or 8, wherein the clustering (S105) further involves applying a k-means clustering algorithm.

10. The method according to any one of the preceding claims, wherein the clustering (S105) further involves:

identifying a singular vector corresponding to the first user (250), by determining the singular vector that has its largest component at a position within the singular vector that corresponds to the position of the first user (250) in the space of users; and
identifying as the user group to which the first user (250) is associated, the user group containing the singular vector corresponding to the first user (250).

11.  A server (200) for automatically transmitting a message to a first user (250) communicating with the server (200), the server (200) comprising:

a first input unit (201) configured to obtain a first set of time-stamped previous locations of the first user (250);
a second input unit (201) configured to obtain, for each of a plurality of second users, a second set of time-stamped previous locations of the second user; and
a computation unit (202) configured to:

determine, for each of the first and second users, one or more stay locations on the basis of the respective set of time-stamped previous locations;
**characterized in that**
the computation unit (202) is further configured to:

generate a user-location matrix linking the space of the first and second users and the space of stay locations to respective quantities indicative of durations or counts of stay, wherein a dimension of said space of the first and second users is given by the number of the first and second users, and wherein each of the entries of the user-location matrix relates to a given one of the first and second users and to a given stay location, and corresponds to a quantity indicative of a duration or count of stay of the respective user at the respective stay location;
perform a singular value decomposition of the user-location matrix to obtain singular values of the user-location matrix and singular vectors of the user-location matrix relating to the first and second users;
select a subset of the singular vectors that correspond to a given number of the largest singular values; and
determine a plurality of user groups by performing clustering on the subset of singular vectors; and
the server (200) further comprises:

a message generation unit (204) configured to generate navigation information in accordance with an association of the first user (250) to a user group among the plurality of user groups and a current location (130) of the first user (250), the navigation information relating to a target location, and to include the navigation information in a message; and
a transmitting unit (203) configured to transmit the message to the first user (250) in accordance with the association of the first user (250) to the user group among the plurality of user groups.

**Patentansprüche**

1.  Verfahren zum automatischen Übertragen einer Nachricht an einen ersten Benutzer (250), wobei das Verfahren Folgendes umfasst:

Erlangen eines ersten Satzes von mit Zeitstempel versehenen vorherigen Standorten des ersten Benutzers (250);
Erlangen, für jeden einer Vielzahl von zweiten Benutzern, eines zweiten Satzes von mit Zeitstempel versehenen vorherigen Standorten des zweiten Benutzers; und
Bestimmen (S102), für jeden von den ersten und zweiten Benutzern, eines oder mehrerer Aufenthaltsorte auf der Grundlage des jeweiligen Satzes von mit Zeitstempel versehenen vorherigen Standorten;
**dadurch gekennzeichnet, dass** das Verfahren ferner Folgendes umfasst:

Erzeugen (S103) einer Benutzerstandortsmatrix, die den Raum der ersten und zweiten Benutzer und den Raum der Aufenthaltsstandorte mit jeweiligen Größe verknüpft, die eine Dauer oder einen Zählwert von Aufenthalten angibt, wobei sich eine Abmessung des Raums der ersten und zweiten Benutzer aus der Anzahl der ersten und zweiten Benutzern ergibt, und wobei jeder Eintrag der Benutzerstandortsmatrix einen gegebenen der ersten und zweiten Benutzer und einen gegebenen Aufenthaltsort betrifft und einer Größe entspricht, die eine Dauer oder einen Zählwert des Aufenthalts des jeweiligen Benutzer an dem jeweiligen Aufenthaltsort angibt;

Durchführen (S104) einer Singularwertzerlegung der Benutzerstandortsmatrix, um Singularwerte der Benutzerstandortsmatrix und Singularvektoren der Benutzerstandortsmatrix in Bezug auf die ersten und zweiten Benutzer zu erlangen;

Auswählen einer Untergruppe der Singularvektoren, die einer gegebenen Anzahl der größten Singularwerte entspricht;

Bestimmen (S105) einer Vielzahl von Benutzergruppen durch Durchführen von Clusterung an der Untergruppe von Singularvektoren; und

Übertragen (S106) einer Nachricht mit Navigationsinformationen zu einem Zielort an den ersten Benutzer (250) gemäß einer Zuordnung des ersten Benutzers (250) zu einer Benutzergruppe unter der Vielzahl von Benutzergruppen,

wobei die Navigationsinformationen aufbauend auf der Zugehörigkeit des ersten Benutzers (250) zu der Benutzergruppe und einem aktuellen Standort (130) des ersten Benutzers (250) erzeugt werden.

2.  Verfahren nach Anspruch 1, ferner umfassend:

Vorverarbeiten des ersten und zweiten Satzes von mit Zeitstempel versehenen vorherigen Standorten durch Identifizieren erster Gruppen von mit Zeitstempel versehenen vorherigen Standorten, die identische Zeitstempel aufweisen, in jedem Satz, und Entfernen aller mit Zeitstempel versehenen vorherigen Standorte mit Ausnahme von einem in jeder identifizierten ersten Gruppen.

3.  Verfahren nach Anspruch 1 oder 2, ferner umfassend:

Vorverarbeiten des ersten und zweiten Satzes von mit Zeitstempel versehenen vorherigen Standorten durch Identifizieren zweiter Gruppen von mit Zeitstempel versehenen vorherigen Standorten, die identischen Standorten entsprechen, in jedem Satz, und Entfernen aller mit Zeitstempel versehenen vorherigen Standorte mit Ausnahme der mit dem frühesten und spätesten Zeitstempel versehenen in jeder identifizierten zweiten Gruppe.

4.  Verfahren nach einem beliebigen der vorstehenden Ansprüche, wobei das Bestimmen, für jeden von den ersten und zweiten Benutzern, eines oder mehrerer Aufenthaltsstandorte für einen gegebenen Satz von mit Zeitstempel versehenen vorherigen Standorten Folgendes beinhaltet:

für ein erstes Paar von mit Zeitstempel versehenen vorherigen Standorten, Bestimmen, ob eine erste Bedingung erfüllt ist, wobei die erste Bedingung erfüllt ist, wenn eine räumliche Entfernung zwischen dem ersten Paar von mit Zeitstempel versehenen vorherigen Standorten kleiner als ein vorgegebener Entfernungsschwellenwert ist;

für ein zweites Paar von mit Zeitstempel versehenen vorherigen Standorten, Bestimmen, ob eine erste Bedingung erfüllt ist, wobei die zweite Bedingung erfüllt ist, wenn eine zeitliche Entfernung zwischen dem zweiten Paar von mit Zeitstempel versehenen vorherigen Standorten größer als ein vorgegebener Zeitschwellenwert ist; und

In-Beziehung-Setzen von aufeinanderfolgenden mit Zeitstempel versehenen vorherigen Standorten mit einem Aufenthaltsort, wenn jedes der Paare aufeinanderfolgender mit Zeitstempel versehener vorheriger Standorten in der Gruppe die erste Bedingung erfüllt und wenn das Paar, das durch den mit dem frühesten Zeitstempel versehenen vorherigen Standort und den mit dem spätesten mit Zeitstempel versehenen vorherigen Standort bildet, die zweite Bedingung erfüllt.

5.  Verfahren nach Anspruch 4, wobei das Bestimmen des einen oder der mehreren Aufenthaltsorte für einen gegebenen mit Zeitstempel versehenen vorherigen Standorten ferner Folgendes beinhaltet:

Einstellen eines Mittelwerts der mit Zeitstempel versehenen vorherigen Standorte der Gruppe aufeinanderfolgender mit Zeitstempel versehener vorheriger Standorte als den Aufenthaltsort.

6.  Verfahren nach Anspruch 4 oder 5, wobei das Bestimmen des einen oder der mehreren Aufenthaltsorte für einen gegebenen mit Zeitstempel versehenen vorherigen Standorten ferner Folgendes beinhaltet:

Einstellen einer Zeitdifferenz zwischen einem Zeitstempel des mit dem frühesten Zeitstempel versehenen vorherigen Standorts und dem Zeitstempel des mit dem spätesten Zeitstempel versehenen vorherigen Standorts in der Gruppe aufeinanderfolgender mit Zeitstempel versehener vorheriger Standorte als die Größe, die die Dauer oder den Zählwert des Aufenthalts an dem Aufenthaltsort angibt.

7.  Verfahren nach einem beliebigen der vorstehenden Ansprüche, wobei das Clustern (S105) das Bestimmen eines Werts eines Entfernungsmaßes zwischen einem Paar Singularvektoren in der Untergruppe von Singularvektoren beinhaltet.

8. Verfahren nach Anspruch 7, wobei das Clustern (S105) ferner das Bestimmen einer vorgegebenen Anzahl von Clustern von Singularvektoren in der Untergruppe von Singularvektoren beinhaltet, derart, dass eine Summe von Varianzen von Werten des Entfernungsmaßes in jedem Cluster minimiert wird.

9. Verfahren nach Anspruch 7 oder 8, wobei das Clustern (S105) ferner das Anwenden eines k-Means-Clusterungsalgorithmus beinhaltet.

10. Verfahren nach einem beliebigen der vorstehenden Ansprüche, wobei das Clustern (S105) ferner Folgendes beinhaltet

Identifizieren eines Singularvektors, der dem ersten Benutzer (250) entspricht, durch Bestimmen des Singularvektors, der seine größte Komponente an einer Position in dem Singularvektor aufweist, die der Position des ersten Benutzers (250) in dem Raum der Benutzer entspricht; und
Identifizieren der Benutzergruppe, die den Singularvektor enthält, der dem ersten Benutzer (250) entspricht, als die Benutzergruppe, der der erste Benutzer (250) angehört.

11. Server (200) zum automatischen Übertragen einer Nachricht an einen ersten Benutzer (250), der mit dem Server (200) kommuniziert, wobei der Server (200) Folgendes umfasst:

eine erste Eingabeeinheit (201), die zum Erlangen eines ersten Satzes von mit Zeitstempel versehenen vorherigen Standorten des ersten Benutzers (250) konfiguriert ist;
eine zweite Eingabeeinheit (201), die zum Erlangen, für jeden einer Vielzahl von zweiten Benutzern, eines zweiten Satzes von mit Zeitstempel versehenen vorherigen Standorten des zweiten Benutzers konfiguriert ist; und
eine Recheneinheit (202), die konfiguriert ist zum:

Bestimmen, für jeden von den ersten und zweiten Benutzern, eines oder mehrerer Aufenthaltsorte auf der Grundlage des jeweiligen Satzes von mit Zeitstempel versehenen vorherigen Standorten;
**dadurch gekennzeichnet, dass**
die Recheneinheit (202) ferner konfiguriert ist zum:

Erzeugen einer Benutzerstandortsmatrix, die den Raum der ersten und zweiten Benutzer und den Raum der Aufenthaltsstandorte mit jeweiligen Größe verknüpft, die eine Dauer oder einen Zählwert von Aufenthalten angibt, wobei sich eine Abmessung des Raums der ersten und zweiten Benutzer aus der Anzahl der ersten und zweiten Benutzern ergibt, und wobei jeder Eintrag der Benutzerstandortsmatrix einen gegebenen der ersten und zweiten Benutzer und einen gegebenen Aufenthaltsort betrifft und einer Größe entspricht, die eine Dauer oder einen Zählwert des Aufenthalts des jeweiligen Benutzer an dem jeweiligen Aufenthaltsort angibt;
Durchführen einer Singularwertzerlegung der Benutzerstandortsmatrix, um Singularwerte der Benutzerstandortsmatrix und Singularvektoren der Benutzerstandortsmatrix in Bezug auf die ersten und zweiten Benutzer zu erlangen;
Auswählen einer Untergruppe der Singularvektoren, die einer gegebenen Anzahl der größten Singularwerte entspricht;
Bestimmen einer Vielzahl von Benutzergruppen durch Durchführen von Clusterung an der Untergruppe von Singularvektoren; und
wobei der Server (200) ferner Folgendes umfasst:

eine Nachrichtenerzeugungseinheit (204), die zum Erzeugen von Navigationsinformationen gemäß einer Zugehörigkeit des ersten Benutzers (250) zu einer Benutzergruppe unter der Vielzahl von Benutzergruppen und eines aktuellen Standorts (130) des ersten Benutzers (250), wobei die Navigationsinformationen einen Zielort betreffen, und Einbeziehen der Navigationsinformationen in eine Nachricht konfiguriert ist; und
eine Übertragungseinheit (203), die zum Übertragen der Nachricht an den ersten Benutzer (250) gemäß der Zugehörigkeit des ersten Benutzers (250) zu einer Benutzergruppe unter der Vielzahl von Benutzergruppen konfiguriert ist.

**Revendications**

1. Procédé de transmission automatique d'un message à un premier utilisateur (250), le procédé comprenant les étapes suivantes :

   obtenir un premier ensemble de localisations précédentes horodatées du premier utilisateur (250) ;
   obtenir, pour chaque utilisateur d'une pluralité de deuxièmes utilisateurs, un deuxième ensemble de localisations précédentes horodatées du deuxième utilisateur ; et
   déterminer (S102), pour chacun des premiers et deuxièmes utilisateurs, une ou plusieurs localisations de présence d'après l'ensemble respectif de localisations précédentes horodatées ;
   **caractérisé en ce que** le procédé comprend en outre les étapes suivantes :

   générer (S103) une matrice utilisateur-localisation reliant l'espace des premiers et deuxièmes utilisateurs et l'espace des localisations de présence aux valeurs respectives indiquant les durées de présence ou les nombres de présences, une dimension dudit espace des premiers et deuxièmes utilisateurs étant donnée par le nombre de premiers et deuxièmes utilisateurs, et chacune des entrées de la matrice utilisateur-localisation se rapportant à un utilisateur donné parmi les premiers et deuxièmes utilisateurs et à une localisation de présence donnée, et correspondant à une valeur indiquant une durée de présence ou un nombre de présences de l'utilisateur respectif à la localisation de présence respective ;
   effectuer (S104) une décomposition en valeurs singulières de la matrice utilisateur-localisation pour obtenir des valeurs singulières de la matrice utilisateur-localisation et des vecteurs singuliers de la matrice utilisateur-localisation se rapportant aux premiers et deuxièmes utilisateurs ;
   sélectionner un sous-ensemble des vecteurs singuliers qui correspondent à un nombre donné de valeurs singulières les plus grandes ;
   déterminer (S105) une pluralité de groupes d'utilisateurs en effectuant un groupage sur le sous-ensemble des vecteurs singuliers ; et
   transmettre (S106) un message contenant des informations de navigation se rapportant à une localisation cible au premier utilisateur (250) selon une association du premier utilisateur (250) avec un groupe d'utilisateurs parmi la pluralité de groupes d'utilisateurs, les informations de navigation étant générées d'après l'association du premier utilisateur (250) avec le groupe d'utilisateurs et une localisation actuelle (130) du premier utilisateur (250).

2. Procédé selon la revendication 1, comprenant en outre les étapes suivantes :
   effectuer un prétraitement des premier et deuxième ensembles de localisations précédentes horodatées en identifiant, dans chaque ensemble, des premiers groupes de localisations précédentes horodatées qui ont des horodatages identiques, et en supprimant toutes les localisations précédentes horodatées sauf une dans chaque premier groupe identifié.

3. Procédé selon la revendication 1 ou 2, comprenant en outre les étapes suivantes :
   effectuer un prétraitement des premier et deuxième ensembles de localisations précédentes horodatées en identifiant, dans chaque ensemble, des deuxièmes groupes de localisations précédentes horodatées qui correspondent à des localisations identiques, et en supprimant toutes les localisations précédentes horodatées sauf la plus ancienne et la plus récente dans chaque deuxième groupe identifié.

4. Procédé selon l'une quelconque des revendications précédentes, dans lequel la détermination, pour chacun des premiers et deuxièmes utilisateurs, d'une ou de plusieurs localisations de présence pour un ensemble donné de localisations précédentes horodatées comprend les étapes suivantes :

   pour une première paire de localisations précédentes horodatées, déterminer si une première condition est satisfaite, la première condition étant satisfaite si une distance spatiale entre ladite première paire de localisations précédentes horodatées est inférieure à une valeur de seuil de distance prédéterminée ; et
   pour une deuxième paire de localisations précédentes horodatées, déterminer si une deuxième condition est satisfaite, la deuxième condition étant satisfaite si une différence de temps entre ladite deuxième paire de localisations précédentes horodatées est supérieure à une valeur de seuil de temps prédéterminée ; et
   associer un groupe de localisations précédentes horodatées consécutives à une localisation de présence si chacune des paires de localisations précédentes horodatées consécutives dans le groupe satisfait à la première condition et si la paire formée par la localisation précédente horodatée la plus ancienne dans le groupe et la localisation précédente horodatée la plus récente dans le groupe satisfait à la deuxième condition.

**5.** Procédé selon la revendication 4, dans lequel la détermination de la ou des localisations de présence pour un ensemble donné de localisations précédentes horodatées comprend en outre l'étape suivante :
définir une moyenne des localisations précédentes horodatées dudit groupe de localisations précédentes horodatées consécutives comme étant la localisation de présence.

**6.** Procédé selon la revendication 4 ou 5, dans lequel la détermination de la ou des localisations de présence pour un ensemble donné de localisations précédentes horodatées comprend en outre l'étape suivante :
définir une différence de temps entre un horodatage de la localisation précédente horodatée la plus ancienne et l'horodatage de la localisation précédente horodatée la plus récente dans ledit groupe de localisations précédentes horodatées consécutives comme étant la valeur indiquant la durée de présence ou le nombre de présences à la localisation de présence.

**7.** Procédé selon l'une quelconque des revendications précédentes, dans lequel le groupage (S105) comprend la détermination d'une valeur d'une mesure de distance entre une paire de vecteurs singuliers dans le sous-ensemble de vecteurs singuliers.

**8.** Procédé selon la revendication 7, dans lequel le groupage (S105) comprend en outre la détermination d'un nombre prédéterminé de groupes de vecteurs singuliers dans le sous-ensemble de vecteurs singuliers de telle manière qu'une somme des variances des valeurs de la mesure de distance dans chaque groupe soit minimisée.

**9.** Procédé selon la revendication 7 ou 8, dans lequel le groupage (S105) comprend en outre l'application d'un algorithme de groupage à k moyennes.

**10.** Procédé selon l'une quelconque des revendications précédentes, dans lequel le groupage (S105) comprend en outre les étapes suivantes :

identifier un vecteur singulier correspondant au premier utilisateur (250), en déterminant le vecteur singulier dont la plus grande composante est à une position dans le vecteur singulier qui correspond à la position du premier utilisateur (250) dans l'espace des utilisateurs ; et
identifier comme étant le groupe d'utilisateurs auquel le premier utilisateur (250) est associé, le groupe d'utilisateurs contenant le vecteur singulier correspondant au premier utilisateur (250).

**11.** Serveur (200) destiné à transmettre automatiquement un message à un premier utilisateur (250) communiquant avec le serveur (200), le serveur (200) comprenant :

un premier module d'entrée (201) configuré pour obtenir un premier ensemble de localisations précédentes horodatées du premier utilisateur (250) ;
un deuxième module d'entrée (201) configuré pour obtenir, pour chaque utilisateur d'une pluralité de deuxièmes utilisateurs, un deuxième ensemble de localisations précédentes horodatées du deuxième utilisateur ; et
un module de calcul (202) configuré pour :

déterminer, pour chacun des premiers et deuxièmes utilisateurs, une ou plusieurs localisations de présence d'après l'ensemble respectif de localisations précédentes horodatées ;
**caractérisé en ce que**
le module de calcul (202) est en outre configuré pour :

générer une matrice utilisateur-localisation reliant l'espace des premiers et deuxièmes utilisateurs et l'espace des localisations de présence aux valeurs respectives indiquant les durées de présence ou les nombres de présences, une dimension dudit espace des premiers et deuxièmes utilisateurs étant donnée par le nombre de premiers et deuxièmes utilisateurs, et chacune des entrées de la matrice utilisateur-localisation se rapportant à un utilisateur donné parmi les premiers et deuxièmes utilisateurs et à une localisation de présence donnée, et correspondant à une valeur indiquant une durée de présence ou un nombre de présences de l'utilisateur respectif à la localisation de présence respective ;
effectuer une décomposition en valeurs singulières de la matrice utilisateur-localisation pour obtenir des valeurs singulières de la matrice utilisateur-localisation et des vecteurs singuliers de la matrice utilisateur-localisation se rapportant aux premiers et deuxièmes utilisateurs ;
sélectionner un sous-ensemble des vecteurs singuliers qui correspondent à un nombre donné de valeurs singulières les plus grandes ;

déterminer une pluralité de groupes d'utilisateurs en effectuant un groupage sur le sous-ensemble des vecteurs singuliers ; et

le serveur (200) comprend en outre :

un module de génération de message (204) configuré pour générer des informations de navigation selon une association du premier utilisateur (250) avec un groupe d'utilisateurs parmi la pluralité de groupes d'utilisateurs et une localisation actuelle (130) du premier utilisateur (250), les informations de navigation se rapportant à une localisation cible, et pour inclure les informations de navigation dans un message ; et

un module de transmission (203) configuré pour transmettre le message au premier utilisateur (250) selon l'association du premier utilisateur (250) avec le groupe d'utilisateurs parmi la pluralité de groupes d'utilisateurs.

S101 — Preprocessing ← Trajectories — 110

S102 — Determination of Stay Locations

S103 — Generation of User-Location Matrix

S104 — Singular Value Decomposition

S105 — Clustering → User Groups — 120

S106 — Transmission of Message ← User Location — 130

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011276565 A1

**Non-patent literature cited in the description**

- **HSU, W.-J. ; DUTTA, D. ; HELMY, A.** Structural Analysis of User Association Patterns in University Campus Wireless LANs. *IEEE Trans. on Mobile Computing,* 01 November 2012, vol. 11 (11), 1734-1748
- **ZHENG, Y. ; ZHANG, L. ; MA, Z. ; XIE, X. ; MA, W.-Y.** Recommending Friends and Locations Based on Individual Location History. *ACM Trans. Web,* 01 February 2011, vol. 5 (1), 1-44
- **ZHENG, Y. ; ZHANG, L. ; MA, Z. ; XIE, X. ; MA, W.Y.** Recommending Friends and Locations Based on Individual Location History. *ACM Trans. Asian Language Information Processing,* 2007, vol. 6 (3), 1-47
- Some Methods for Classification and Analysis of Multivariate Observations. **MACQUEEN, J. B.** Proceedings of fifth Berkeley Symposium on Mathematical Statistics and Probability. University of California Press, 1967, 281-297
- **STEINHAUS, H.** Sur la division des corps materiels en parties. *Bull. Acad. Polon. Sci.,* 1957, vol. 4 (12), 801-804
- **LLOYD, S. P.** Least squares quantization in PCM. *IEEE Transactions on Information Theory,* 1982, vol. 28 (2), 129-137
- **HASTIE, H. ; TIBSHIRANI, R. ; FRIEDMAN, J.** The Elements of Statistical Learning: Data Mining, Inference, and Prediction. Springer, 2009, 459